(19) **Europäisches Patentamt**

**European Patent Office**

**Office européen des brevets**

(11) **EP 0 874 968 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.[7]: **F24J 2/48**

(21) Anmeldenummer: **97914076.1**

(86) Internationale Anmeldenummer:
**PCT/DE97/00104**

(22) Anmeldetag: **15.01.1997**

(87) Internationale Veröffentlichungsnummer:
**WO 97/26488 (24.07.1997 Gazette 1997/32)**

(54) **FARBIGER STRAHLUNGSENERGIE-WANDLER UND SEINE VERWENDUNG**

COLOURED RADIATION ENERGY CONVERTER AND ITS USE

CONVERTISSEUR CHROMATIQUE D'ENERGIE RADIANTE ET UTILISATION

(84) Benannte Vertragsstaaten:
**AT CH DE IT LI**

(30) Priorität: **15.01.1996 DE 19601238**

(43) Veröffentlichungstag der Anmeldung:
**04.11.1998 Patentblatt 1998/45**

(73) Patentinhaber:
• **Lazarov, Miladin P.**
**80797 München (DE)**
• **Mayer, Isabella**
**80797 München (DE)**

(72) Erfinder:
• **LAZAROV, Miladin**
**D-80797 München (DE)**

• **MAYER, Isabella**
**D-80797 München (DE)**
• **SCHELLINGER, Helmut**
**D-80469 München (DE)**

(74) Vertreter: **Schüssler, Andrea, Dr.**
**Kanzlei Huber & Schüssler**
**Truderinger Strasse 246**
**81825 München (DE)**

(56) Entgegenhaltungen:
**EP-A- 0 073 417      WO-A-95/17533**
**CH-A- 581 812      US-A- 4 442 166**

EP 0 874 968 B1

**Beschreibung**

Die Erfindung betrifft einen farbigen Strahlungsenergie-Wandler (des selektiven Absorber typs) zum Umwandeln von optischer Strahlungsenergie in Wärmeenergie, Verfahren zu seiner Herstellung und seine Verwendung.

Bisher eingesetzte Sonnenkollektoren werden als Flachkollektoren oder Röhrenkollektoren mit oder ohne Vakuum in mehr oder weniger großen Flächen, vornehmlich auf Hausdächer, montiert. Dabei sind die verwendeten Absorber schwarz oder nahezu schwarz (schwarzbraun, schwarzgrau). Diese schwarzen Flächen sind farblich schlecht an ihre Umgebung adaptiert und können architektonisch nur in sehr begrenztem Maße in ein Baukonzept integriert werden. Sie stören häufig das ästhetische Empfinden der Bauherren.

Sonnenenergie kann z.B. für die Brauchwassererwärmung (solarthermische Anwendungen) mit Hilfe von Sonnenkollektoren einfach und umweltfreundlich genutzt werden. Der Kollektor besteht dabei aus einer Absorptionsfläche, mit der Sonnenstrahlung in Wärme umgewandelt wird und einem damit verbundenen Rohrsystem, in dem durch zirkulierende Flüssigkeiten oder Luft die Wärme abgeführt und für den Verbrauch bereitgestellt werden kann.

Bisher wurden für diese Sonnenenergieabsorber meist Substrate aus einem metallischen Material verwendet, die mit einer, zum Beispiel mittels eines Pigmentes gebildeten, schwarzen Oberflächenschicht versehen wurden. Diese Solarenergieabsorber sind bezüglich der Wärmeabstrahlung dem absoluten schwarzen Körper sehr ähnlich und absorbieren daher elektromagnetische Wellen im sichtbaren Bereich und im nahen IR-Bereich sehr gut. Sie haben jedoch gleichzeitig ein hohes Wärmeabstrahlungsvermögen im IR-Bereich und verursachen hohe Wärmeverluste durch Abstrahlung. So bemüht man sich schon seit längerer Zeit selektive Solarenergieabsorber zu entwickeln, mit denen die thermischen Abstrahlungsverluste (gekennzeichnet durch den thermischen Emissionsgrad $\in$) deutlich reduziert werden konnten. Eine Vielfalt selektiver Beschichtungen, die eine scharze bzw. dunkle Oberfläche zeigen, sind bekannt (z.B. aus der DE-A-36 15 181) oder solche, die chemisch schwarze Metalloxide erzeugen (z.B. DE-C-28 04 447). Weitere Selektive Beschichtungen sind in WO-A-95/17533 beschrieben.
Bisher herrschte in der Solarenergieforschung weitgehende Einigkeit darüber, daß mit schwarzen Absorberflächen die besten Ergebnisse in Bezug auf den Wirkungsgrad erzielt werden könnten.

Es war bisher ein Grundsatz, daß die dekorative Gestaltung der Kollektoren der Optimierung der technischen Kenndaten nachgeordnet werden sollte. So wird z.B. in der DE-OS-32 27 899 erläutert, daß "bei Dach- und Wandkollektoren die Gestaltung nach technischen Gesichtspunkten zur Maximierung der Strahlungsnutzung erfolgt. Gliederung und Formgebung erfolgen nach konstruktiven Gesichtspunkten. Gestalterische Einflüsse werden lediglich bei den Gesamtabmessungen und bei den Maßproportionen der Felder und Sprossen als Entscheidungskriterium herangezogen. Angestrebt wird ein möglichst großer Anteil der Fläche mit Strahlungseinfall, eine möglichst geringe Strahlungsabsorption der Außenverkleidung und eine ideal schwarze Absorberfläche, z.B. selektive Beschichtungen mit großer Strahlungsabsorption".

Diese schwarzen Flächen, die in einem speziellen Gehäuse zumeist am Dach montiert sind, werden vom Verbraucher häufig als unästhetisch empfunden. Das ist ein wesentlicher Grund weshalb der Einsatz von Solaranlagen von vielen Architekten abgelehnt wird. Bunt-farbige Kollektoren gibt es bisher nicht.

Die Aufgabe der vorliegenden Erfindung besteht deshalb darin, einen farbigen Strahlungsenergie-Wandler zum Umwandeln von Strahlungsenergie in Wärmeenergie, insbesondere für die Brauchwasseraufbereitung, bereitzustellen, wobei der Stahlungsenergie-Wandler hohen ästhetischen und technischen Anforderungen gerecht werden soll.

Diese Aufgabe wird durch die Gegenstände der Patentansprüche 1 und 11 gelöst. Vorteilhafte Ausgestaltungen ergeben sich aus den Unteransprüchen.

Von den Erfindern wurde zwar festgestellt, daß je nach Farbe ein Verlust an Wirkungsgrad eintritt, aber für den Niedrigtemperaturbereich ist dieser Verlust tolerabel, da die Minderleistung durch eine geringfügige Erhöhung der Kollektorfläche kompensiert werden kann. Der Marktvorteil durch den Einsatz von ästhetisch empfundenen und an die jeweiligen architektonischen Erfordernisse adaptierten Farbschichten überwiegt hier.

Erfindungsgemäß soll durch die Begriffe "farbig" oder "buntfarbig" ausgedrückt werden, daß es sich um Strahlungsenergie-Wandler mit Oberflächen handelt, die eine von Schwarz bzw. Anthrazit unterschiedliche Farbe haben.

Erfindungsgemäß werden Strahlungsenergiewandler mit hochselektiven Schichten hergestellt, die einen spektralen Reflexionsgrad ($\zeta$) größer 0,05, vorzugsweise > 0,1, besonders bevorzugt > 0,2 für mindestens eine Wellenlänge ($\lambda$) des sichtbaren Lichts zeigen. Weiter wird erfindungsgemäß ein Absorptionsgrad a > 0,4, vorzugsweise > 0,75, und ein thermischer Emissionsgrad (gemessen bei 100°C) E < 0,3, vorzugsweise < 0,1, erreicht.

Das menschliche Gehirn empfindet Farbe aufgrund einer Stimulation der Farbrezeptoren in der Netzhaut des Auges, die durch einfallende Strahlung erzeugt wird. Der weitaus häufigste Fall ist, daß diese Strahlung von nicht selbstleuchtenden Objekten herrührt. Diese Objekte werden von einer externen Lichtquelle beleuchtet und reflektieren einen Teil dieser Strahlung, die dann das Auge erreicht. Im hier vorliegenden Fall ist das Objekt der beanspruchte Strahlungsenergiewandler und die beleuchtende Lichtquelle ist die Sonne. Die spektrale Verteilung der Sonneneinstrahlung auf der Erde ist von Umwelteinflüssen und der Atmosphäre abhängig. In der vorliegenden Anmeldung wird als spektrale Verteilung der Sonne $S_\lambda(\lambda)$ das Normspektrum AM 1.5 (Möller, "Einführung in die Meterologie", Teubner Verlag 1984) verwendet.

Die Sonnenstrahlung trifft auf den Strahlungsenergiewandler (Absorber) und wird dort teilweise reflektiert. Die reflektierte Strahlung $R_\lambda$ ist durch die Gleichung

$$R\lambda(\lambda) = \zeta(\lambda)\, S_\lambda(\lambda) \tag{1}$$

bestimmt, wobei $\zeta(\lambda)$ der spektrale Reflexionsgrad des Absorbers ist. Diese reflektierte Strahlung $R_\lambda$ trifft dann auf das menschliche Auge und erzeugt dort einen Farbreiz.

Das menschliche Auge besitzt drei Arten von Farbrezeptoren mit unterschiedlicher spektraler Empfindlichkeit. Dabei wird für die drei Arten von Rezeptoren von physiologisch ermittelten Normspektren $\tilde{x}(\lambda)$, $\tilde{y}(\lambda)$ und $\tilde{z}(\lambda)$ ausgegangen (Bergmann/Schäfer, Lehrbuch der Experimentalphysik, Bd. III, Optik, 7. Auflage, 1978, S. 671, Abb. VI, 26). Weiter kann nach Bergmann/Schäfer (Bergmann/ Schäfer, Lehrbuch der Experimentalphysik, Bd. III, Optik, 7. Auflage, 1978, S. 6 ff.) jede Farbe durch einen zweidimensionalen Farbvektor $\vec{f}$ beschrieben werden, wobei sich die Koordinaten x,y des Farbvektors $\vec{f}$ aus den folgenden Gleichungen bestimmen lassen:

$$x = \frac{X}{X+Y+Z}$$
$$y = \frac{Y}{X+Y+Z} \tag{2}$$

wobei

$$X = \int_0^\infty d\lambda \cdot R\lambda(\lambda)\tilde{x}(\lambda)$$
$$Y = \int_0^\infty d\lambda \cdot R\lambda(\lambda)\tilde{y}(\lambda) \tag{3}$$
$$Z = \int_0^\infty d\lambda \cdot R\lambda(\lambda)\tilde{z}(\lambda)$$

$R_\lambda(\lambda)$ stellt in den obigen Gleichungen den Farbreiz dar und ist identisch mit der oben definierten reflektierten Strahlung, d.h wird durch die Gleichung $R_\lambda(\lambda) = \zeta(\lambda)\, S_\lambda(\lambda)$ [s. Gleichung (1)] bestimmt.

Wäre die Sonne eine ideal weiße Lichtquelle, d.h. $S_\lambda(\lambda) = $ const., so wären unbunte Flächen (also weiß, anthrazit bis schwarz) durch den Unbuntvektor $\vec{u}_n = 1/3\,\binom{1}{1}$ beschrieben. Im Sonnenlicht kann das Auge jedoch eine solche unbunte Fläche auch als leicht farbig empfinden, weil die Sonne eben keine ideal weiße Lichtquelle darstellt. Gute selektive Absorber, die bisher an der Sonne alle nahezu schwarz sind, erscheinen deshalb im Lampenlicht etwas farbig, wobei diese Absorber durch Vektoren nahe des Farbvektors $\vec{u}_s \approx \binom{0,350}{0,347}$ beschrieben werden können.

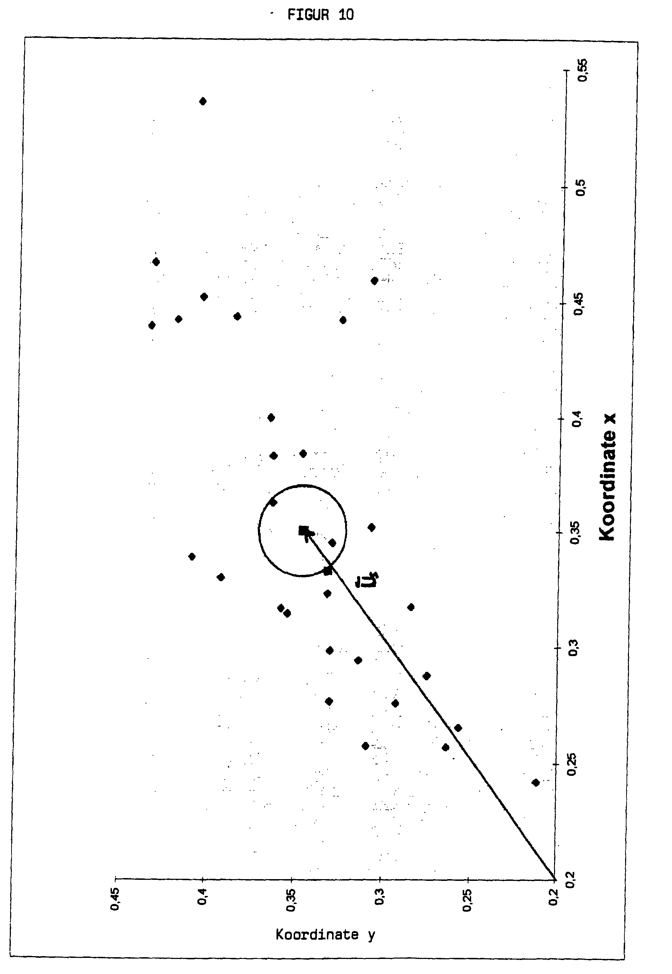

Die vorliegende Erfindung betrifft dagegen selektive Absorber, die in dem Sinne farbig erscheinen, daß deren Farbvektor $\vec{f}$ einen euklischen Abstand vom Vektor $\vec{u}_s$, d.h $|\vec{f} - \vec{u}_s|$ größer als 0,02 aufweist, vorzugsweise > 0,04, besonders bevorzugt > 0,08. Dies ist in Figur 10 verdeutlicht. Im Zentrum des Kreises ist der Unbuntvektor für AM 1.5 Beleuchtung dargestellt: $\vec{u}_s = \binom{0,350}{0,347}$. Der Kreis zeigt einen euklidischen Abstand von 0,02 von $\vec{u}_s$ an. Gegenstand der Erfindung ist deshalb nur, was außerhalb des Kreises liegt.

Der erfindungsgemäße Absorber weist einen gezielten farbigen Eindruck auf. Dieser Farbeindruck ist auf die Gesetzmäßigkeiten der additiven Farbtheorie zurückzuführen (siehe Bergmann/Schäfer, Lehrbuch der Experimentalphysik, Band III, Optik, 7.Auflage, 1978, S.643-654), wobei der Farbeindruck durch die im sichtbaren Wellenlängenbereich reflektierte Strahlung hervorgerufen wird. Auf diese Weise können erfindungsgemäß verschiedene Farbarten, vorzugsweise gold, rot, blau, grün, violett, braun und grau, produziert werden. Diese Farbarten sind dann jedoch weiter hinsichtlich ihrer Helligkeit variabel wie vorzugsweise verschiedene Abstufungen von hellblau, rosa, hellgrün, lila. Auch ausgefallene Farbmischungen, z.B. goldgrün und blaugrün, purpur, silberblau, bronze sind möglich.

Bei dem erfindungsgemäßen Strahlungsenergie-Wandler zur Umwandlung elektromagnetischer Strahlung in Wärme wird bei einem hochwirksamen selektiven Absorber der Reflexionsgrad im Bereich einer definierten Wellenlänge gemäß den Gleichungen (1) - (3) so erhöht, daß ein gewünschter additiver Farbeindruck entsteht. Gleichzeitig wird jedoch ein ausreichender Wirkungsgrad für die Energiegewinnung z.B. zur Brauchwassererwärmung, gewahrt. Erstmals wird damit, durch eine neue Nutzung von hochselektiven Absorbern, wie sie in jüngster Vergangenheit entwickelt wurden, das Design des Absorbers vor die Optimierung des Wirkungsgrades gestellt.

Vorzugsweise kann es sich bei dem erfindungsgemäßen Strahlungsenergie-Wandler um einen Interferenzabsorber handeln. Dabei entstehen die optischen Eigenschaften durch Interferenzen an dünnen Schichten. Die Materialwahl, Schichtdicke und Oberflächenbeschaffenheit ist erfindungsgemäß derart, daß die Kohärenz der elektromagnetischen Strahlung nicht wesentlich zerstört wird; d.h. die einzelnen Strahlen noch interferenzfähig sind. Diese Realisierung des Strahlungsenergie-Wandlers steht im Gegensatz zu massiven Materialien, die die geforderten optischen Eigenschaften als intrinsische Eigenschaft haben müssen.

Erfindungsgemäß werden die entsprechenden dünnen Schichten gemäß bekannter PCVD, CVD, PVD oder naßchemischer Verfahren hergestellt. Die Dicke der einzelnen Schichten beträgt dabei zwischen 8 und 8000 nm, vorzugsweise zwischen 30 und 5000 nm, ganz bevorzugt zwischen 90 und 200 nm und diese werden auf einem Substrat aufgebracht. Verglichen mit einem optimal selektiven Interferenzabsorber, d.h. einem schwarzen (unbunten) Absorber, sind die Schichtdicken vorzugsweise entweder auf 2-90% reduziert oder auf 102 bis 500% vergrößert. Diese Dickenänderung bewirkt Änderungen in den Interferenzbedingungen. Während ein Interferenzabsorber so konstruiert wird, daß im sichtbaren Wellenlängenbereich eine Auslöschung stattfindet, stören Dickenänderungen der Schichten diese Auslöschung. Es treten die im vorliegenden Anspruch 1 geforderten Reflexionsmaxima auf. Die gewünschte Farbe wird erreicht, da die Brechzahlen n der erfindungsgemäß verwendeten Materialien bekannt sind. Diese Brechzahlen hängen von $\lambda$ ab. Mittels Airy-Summation (Z. Knittel, Optics of Thin Film, John Wiley Verlag, London (1976)) wird somit aus den jeweiligen Schichtdicken und den Brechzahlen von Substrat und verwendeten Beschichtungsmaterialien der spektrale Reflexionsgrad $\zeta(\lambda)$ berechnet. Durch Einsetzen des berechneten Reflexionsgrads in die vorn beschriebenen Gleichungen (1) bis (3) kann dann der Farbvektor ermittelt werden. Durch systematische Variation der Schichtdicken in dieser Berechnung z.B. mittels eines geeigneten Iterationsverfahrens, wird die Schichtdicke festgelegt, die zu der gewünschten Farbe führt bzw. dieser entspricht. Über die Variation der Schichtdicke wird der unterschiedliche Farbeindruck erreicht, d.h. ein und dasselbe Material kann bei dünnem Auftrag (Schichtdicke gegenüber einem schwarzen Absorber vermindert) eine bestimmte Farbe liefern und bei dickem Auftrag (Schichtdicke gegenüber einem schwarzen Absorber erhöht) eine andere Farbe.

Das Substrat ist bevorzugt ein Metall (z.B. Kupfer, Aluminium oder eine Metallegierung), eine Keramik, Glas, Kunststoff, ein kohlenstoffaserhaltiger Werkstoff oder ein Verbundwerkstoff.

Als selektive Beschichtung kommen unter anderem Metall-, Stickstoff-, Sauerstoff-, Silicium- und Kohlenstoffverbindungen in Frage. Vorzugsweise enthält mindestens eine der dünnen Schichten eine Verbindung zwischen einem oder mehreren Metallen der Nebengruppenelemente des Periodensystems mit Stickstoff, Sauerstoff oder Kohlenstoff. Weiter bevorzugt wird für mindestens eine der dünnen Schichten ein Material aus chemischen Verbindungen zwischen einem oder mehreren Metallen der Gruppe IVA des Periodensystems, Stickstoff, Kohlenstoff oder Sauerstoff verwendet. Beispielsweise seien erwähnt $SiO_2$, $TiO_2$, $MgF_2$, $Al_2O_3$, $SiN_4$, $TiN_x$, $TiC_x$, $ZrN_x$ (mit x = 0,6 bis 1,2). Eine oder mehrere der dünnen Schichten kann auch als Cermet (Keramik-Metall-Komposit) ausgeführt sein.

In einer ganz bevorzugten Ausführungsform für einen Interferenzabsorber werden Schichten auf Ti-N-O-Basis verwendet, die gemäß WO 95/17533 hergestellt werden und die die dort beschriebenen Eigenschaften haben. In Kombination mit ggf. aufgebrachten $SiO_2$-Schichten können ganz unterschiedliche Farbeffekte erreicht werden. In diesem Zusammenhang wird auf die nachfolgenden Beispiele 3-8 verwiesen.

Weiter kann durch die Aufbringung einer zusätzlichen Schicht, die das Interferenzverhalten beeinflußt, der Farbeindruck in weiten Bereichen gestaltet werden. Dies geschieht vorzugsweise dadurch, daß auf einen bestehenden unbunten Strahlungswandler eine 20 bis 600 nm dicke dielektrische Schicht, vorzugsweise $SiO_2$, $TiO_2$, $ZrO_2$, $Si_3N_4$, $Al_2O_3$ oder $MgF_2$, mittels einem PCVD, PVD oder einem naßchemischen Verfahren aufgebracht wird. Aus den Brechzahlen der verwendeten Materialien und den Schichtdicken wird mittels Airy-Summation der Reflexionsgrad $\zeta(\lambda)$ ermittelt. Den Farbvektor erhält man mittels den obigen Gleichungen (1)-(3).

Bei dem erfindungsgemäßen Strahlungsenergie-Wandler werden verschiedene Farbschichten mit verschiedenen Wirkungsgraden für die Wärmeerzeugung nach ästhetischen Gesichtspunkten in einem Kollektor kombiniert angeordnet, jedoch so, daß insgesamt ein ausreichend hoher Wirkungsgrad für die Brauchwassererwärmung erhalten bleibt.

Insbesondere die Kombination von Absorberflächen mit hoher Selektivität (wie z.B. blau, dunkelviolett, braungrau) mit Flächen niedriger Selektivität (goldfarben, rose, grün) sind für die großflächige Dachgestaltung zur Gewinnung von solarthermischer Energie gut geeignet.

Neben der Kombination von einfarbigen Absorberflächen in einem Kollektor können aber auch die einzelnen Absorberflächen verschiedene Muster vornehmlich gleicher Farbart, aber unterschiedlicher Helligkeit enthalten. Ferner können innerhalb einer Absorberfläche die Farben auch kontinuierlich regenbogenförmig ineinander übergehen. Es sind auch ornamentale Muster z.B. in Form eines Penrose-Musters, möglich. Dafür werden verschiedenfarbige Kollektorflächen, die z.B. gemäß einem der nachfolgenden Beispiele hergestellt worden sind, in Oktaederform aneinandergefügt.

Die erfindungsgemäßen Absorber eigenen sich auch als Dach- und Fassadenverkleidungen für Häuser und andere Bauobjekte, insbesondere Hochhäuser und Bürohäuser. Der erfindungsgemäße Absorber kann auch in ein Fensterelement integriert sein, die aneinander gereiht und flächig kombiniert werden können. Auch auf öffentlichen Plätzen oder in Schwimmbädern kann der erfindungsgemäße Absorber eingesetzt werden. Der gewünschte dekorative farbigspiegelnde Effekt wird dabei mit gleichzeitiger Energiegewinnung kombiniert. Durch den wechselnden Lichteinfall während des Tages wird zusätzlich ein wechselnder Farbeffekt abhängig von der Tageszeit realisiert. Ansonsten ist der erfindungsgemäße selektive Absorber natürlich in jeder Art von Kollektoren einsetzbar, insbesondere für Vakuum-, Flach- und Röhrenkollektoren.

Der Farbeindruck, der durch die selektiven Beschichtungen entsteht, erhält seinen besonderen optischen Reiz dadurch, daß es sich bevorzugt um Interferenzen handelt. Einfallende Lichtwellen werden teilweise an den Grenzflächen der dünnen Schichten und auf dem Substrat reflektiert. Dabei entstehen kohärente Teilwellenzüge, die sich für gewisse, von der Blickrichtung abhängige Wellenlängen gegenseitig auslöschen oder verstärken. Statt weißem Licht sieht man somit die komplementären Mischfarben der nicht ausgelöschten Wellenlängen. Insbesondere bei unterschiedlichem Lichteinfall können somit vom menschlichen Auge glänzende Farbnuancen der jeweiligen Farbart erzeugt werden (Schillern der Farben je nach Farbeinfall und Blickwinkel).

Die Valenz der einzelnen Farbvektoren ist oft stark von der Blickrichtung abhängig. Es lassen sich so Absorber herstellen, die aus der Richtung der Sonnenbahn gesehen schwarz erscheinen, für einen aus einer anderen Richtung (z.B. von unten) schauenden Betrachter jedoch farbig erscheinen.

Die vorliegende Erfindung wird nun mit Bezug auf die Figuren weiter beschrieben:

Fig. 1          zeigt den Reflexionsgrad eines Schwarzchrom-Absorbers mit einer SiO$_2$-Schicht ( = oranger bis roter Absorber) in Abhängigkeit von der Wellenlänge

Fig. 2          zeigt den Reflexionsgrad eines Cobalt-Absorbers mit einer SiO$_2$-Schicht ( = oranger Absorber) in Abhängigkeit von der Wellenlänge

Fig. 3 - 8      zeigen den Reflexionsgrad verschiedener Absorber auf Ti-N-O-Basis in Abhängigkeit von der Wellenlänge

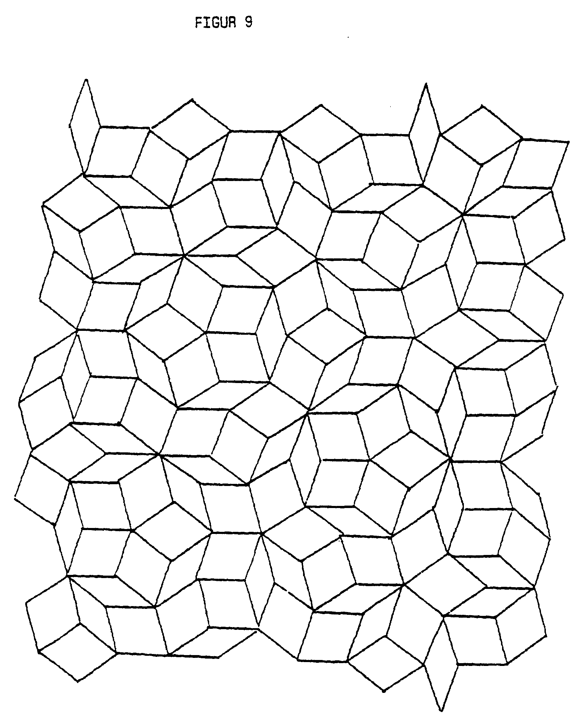

Fig. 9          zeigt das Penrose-Muster eines Absorbers

Fig. 10         zeigt ein Diagramm, in dem die x- und y-Koordinaten der Farbvektoren der in den Beispielen 3- 8 erzeugten Absorbern gegeneinander aufgetragen sind. Im Zentrum des Kreises ist der Unbuntvektor für AM 1.5 Beleuchtung dargestellt; $\vec{u}_s = \binom{0,350}{0,347}$. Der Kreis zeigt einen Abstand von 0,02 von $\vec{u}_s$ an.

Die folgenden Beispiele der bevorzugten Ausführungsformen der Erfindung sollen nur zur Erläuterung der Erfindung dienen und sind nicht beschränkend auszulegen.

Es werden zwei Verfahren zur Realisierung farbiger Absorber vorgestellt. Einmal wird ein schwarzer Absorber mit einer dünnen, vorzugsweise dielektrischen Schicht in einem Beschichtungsverfahren, vorzugsweise CVD, PVD oder naßchemischen Verfahren, aufgebracht. Je nach Wahl der Dicke der Schichten kann eine breite Palette an Farben erzielt werden, z.B. rot, blau, orange, violett, gold, usw.

Beim zweiten Verfahren wird die Schichtdicke der Schichten, aus denen ein optimaler schwarzer (unbunter) Interferenzabsorber bestehen würde, verändert. Durch gezielte Reduktion oder Vergrößerung einzelner Dicken können interessante Farbeffekte erzielt werden.

**Beispiele**

**Beispiel 1:**

**Herstellung eines orange- bis rotfarbenen Absorbers**

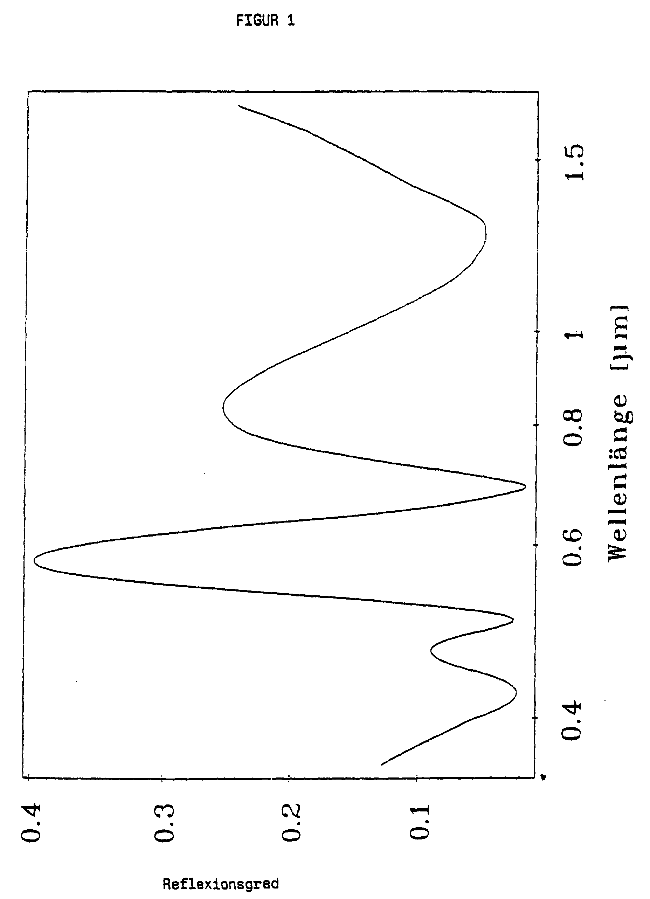

Auf einem kommerziell erhältlichen Schwarzchrom-Absorber wird in einer üblichen Aufdampfanlage eine 200 nm dicke SiO$_2$-Schicht aufgebracht. Fig. 1 zeigt den spektralen Reflexionsgrad dieses Absorbers. Dabei wird der Absorptionsgrad a auf 0,78 reduziert. Durch das Verfahren entsteht eine dunkelorange bis rote Absorberschicht.

**Beispiel 2**

**Herstellung eines orangefarbenen Absorbers**

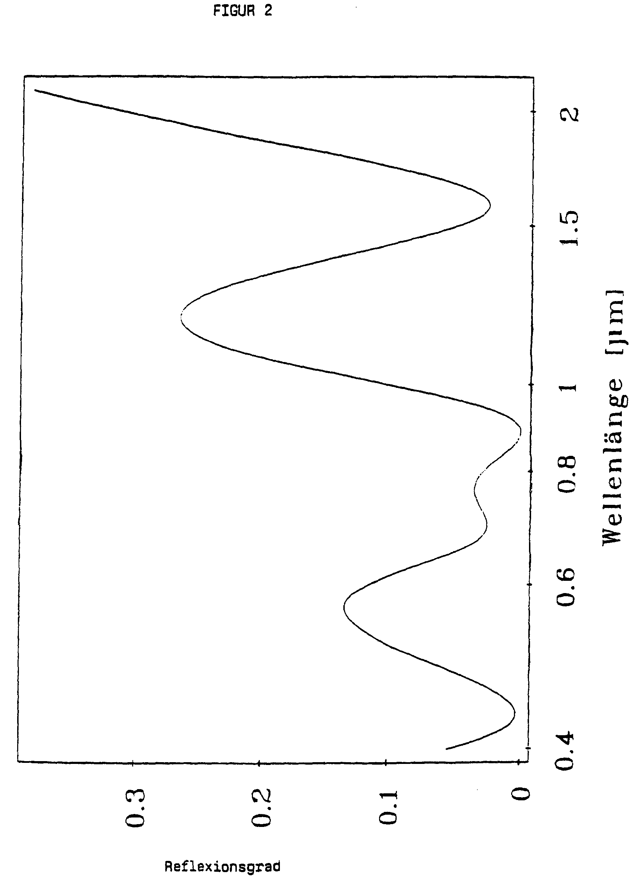

Ein schwarzer, selektiver Cobalt-Absorber, hergestellt nach B. Vitt, Solar Energy Material 13 (1986) p. 323f., wird mit einer 305 nm dicken SiO₂-Schicht bedampft. Fig. 2 zeigt den Reflexionsgrad. Dieser Abosrber hat eine gelb-orange Farbe, bei einem a von 0,91.

**Beispiele 3-8**

**Farbige interferenzabsorber durch Variation der Schichtdicke**

Interferenzabsorber auf Ti-N-O-Basis wurden durch reaktives Aufdampfen hergestellt, wobei die Gase Stickstoff und Sauerstoff in einem bestimmten Verhältnis $pN_2/pO_2$ zugeführt werden. Die Herstellung der Schichten auf Ti-N-O-Basis erfolgte gemäß WO 95/17533 und als metallisches Substrat diente Kupfer. Die Schichtdicke der Absorberschichten wurde dabei variiert. Als Effekt entsteht eine bestimmte Farbe unter gleichzeitiger Reduktion des Absorptionsgrades a gegenüber einem schwarzfarbigen Absorber auf Ti-N-O-Basis. Dieser Effekt kann weiterhin durch das Aufbringen zusätzlicher SiO₂ Schichten mit ebenfalls variabler Dicke beeinflusst werden. Die zur Ausführung des Verfahrens weiteren zu wählenden Parameter sind: Substrattemperatur 270°C, Aufdampfrate 0,7 nm/s, Abstand Verdampfer-Subtrat 45 cm.

Im Folgenden wird eine Anzahl von Beispielen gezeigt, die das Grundfarbenspektrum umfassen. Eine Vielzahl weiterer Farbeffekte ist jedoch erzielbar, wobei unterschiedliche Helligkeiten und Sättigungen der beschriebenen Farben, sowie weitere Farbmischungen erzeugt werden.

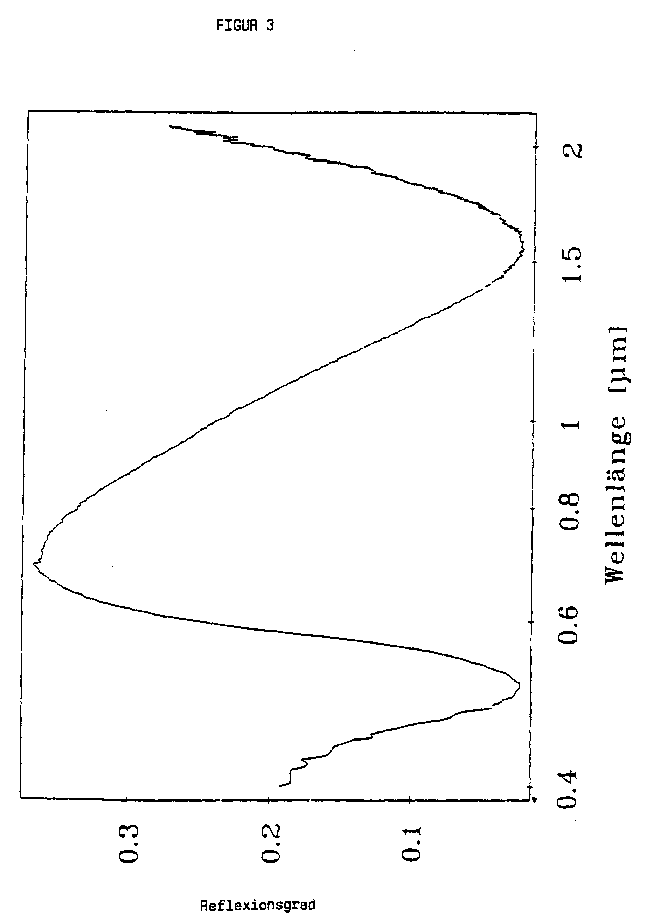

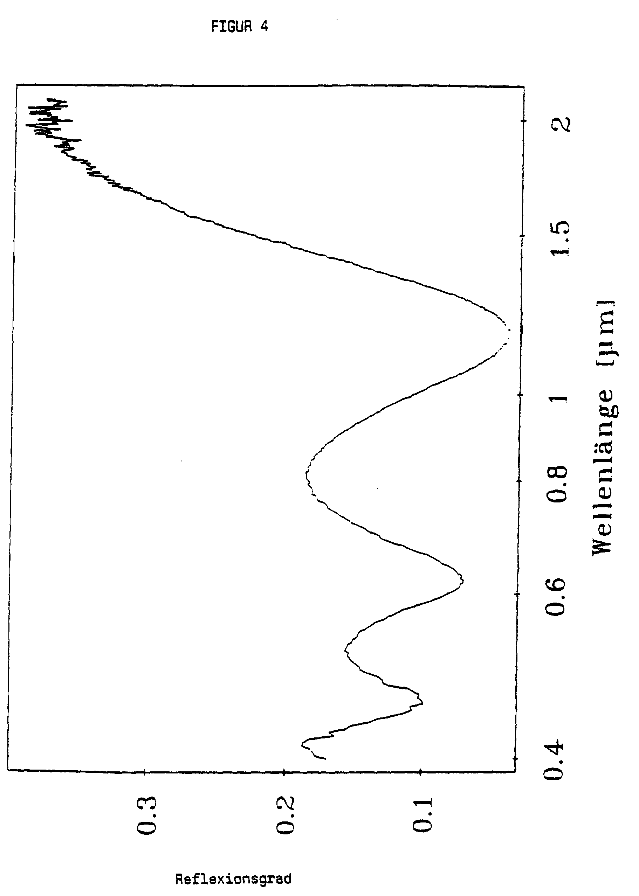

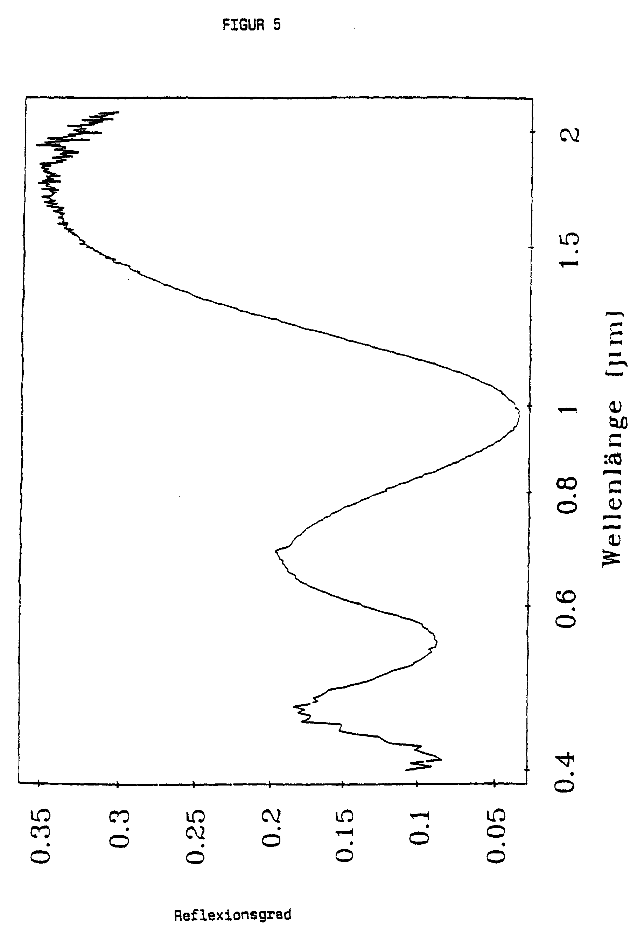

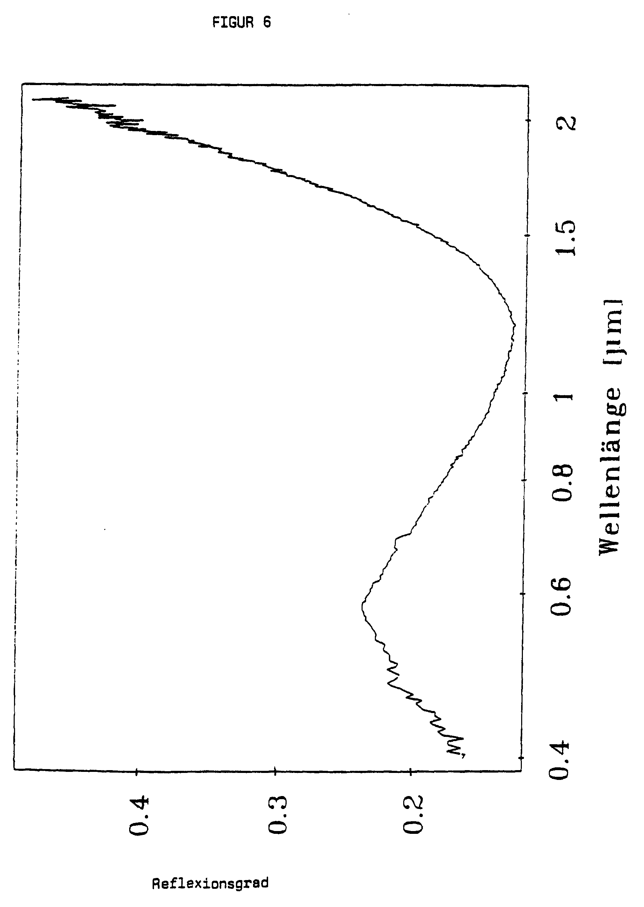

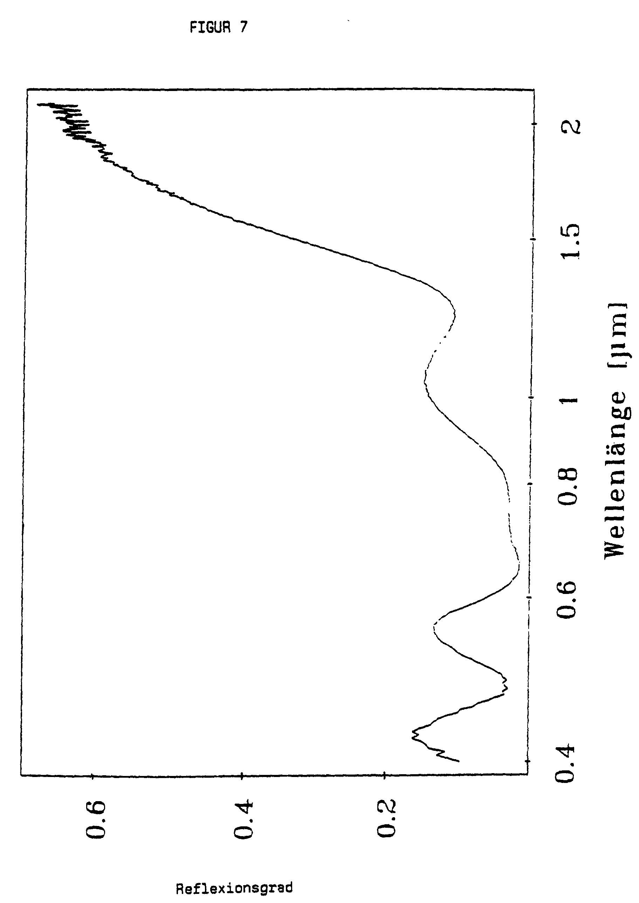

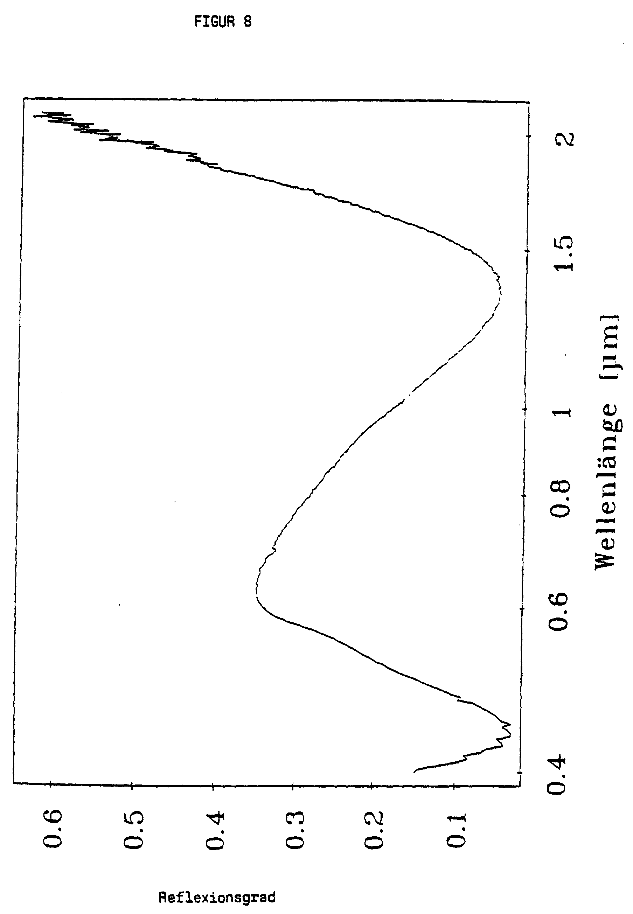

Die Fig. 3-8 zeigen graphisch die Absorptions- und Emissionsspektren der in Tabelle 1 angeführten Beispiele:

Tabelle 1:

| Figur | pN2/pO2 | Schichtdicke d [nm] | Schichtdicke SiO₂ [nm] | α | ∈ | Farbe |
|---|---|---|---|---|---|---|
| 3 | 8 | 180 | keine | 79,4 | 0,09 | karminrot |
| 4 | 6 | 120 | 95 | 86,0 | 0,09 | blaugrün |
| 5 | 6 | 140 | keine | 85,3 | 0,08 | violett |
| 6 | 200 | 100 | keine | 73,6 | 0,09 | silbergrau |
| 7 | 10 | 90 | 320 | 88,1 | 0,15 | grün |
| 8 | 4 | 95 | 105 | 77,9 | 0,06 | gold |

α = solarer Absorptionsgrad

∈ = thermischer Emissionsgrad bei 150°C

Tabelle 2:

| Tabelle der Farbkoordinaten zur Festlegung des Farbwertes der oben angegebenen Beispiele | | | |
|---|---|---|---|
| Figur | Koordinaten des Farbvektors x | Koordinaten des Farbvektors y | wahrgenommene Farbe |
| 3 | 0,459 | 0,308 | karminrot |
| 4 | 0,315 | 0,355 | blau-grün |
| 5 | 0,352 | 0,308 | violett |
| 6 | 0,323 | 0,332 | silbergrau |
| 7 | 0,317 | 0,358 | grün |
| 8 | 0,467 | 0,432 | gold |

**Beispiel 9**

**Ornamentales Beispiel eines farblich kombinierten Kollektors**

Die Anordnung der verschiedenfarbigen Absorber könnte auf einer Fläche nach Form eines Penrose-Musters erfolgen (s. Fig. 12). Hierbei werden verschiedenfarbige Kollektorflächen in Oktaederform aneinandergefügt. Unterhalb dieser Farbflächen, die z.B. auf Kupfersubstrat aufgedampft sind, wird ein wasserführendes Kupferrohr angeschweißt, welches die vom Absorber gesammelte Energie vom Verbraucher abführt.

**Patentansprüche**

1. Strahlungsenergie-Wandler des selektiven Absorber typs zur Umwandlung von optischer Strahlungsenergie in Wärmeenergie, wobei die Oberfläche des Strahlungsenergie-Wandlers einen solaren Absorptionsgrad $\alpha > 0,4$ und einen thermischen Emissionsgrad $\in < 0,3$ hat und für mindestens eine Wellenlänge, die das Auge sieht, einen spektralen Reflexionsgrad $\zeta$ von $> 0,05$ aufweist, dadurch gekennzeichnet, daß der Strahlungsenergie-Wandler farbig ist und einen Farbvektor $\vec{r}$ mit einem euklidischen Abstand vom Vektor

$$\vec{U}_s = \begin{pmatrix} 0,350 \\ 0,347 \end{pmatrix}$$

   von größer als 0,02 aufweist.

2. Strahlungsenergie-Wandler nach Patentanspruch 1, wobei es sich um einen selektiven Interferenzabsorber handelt.

3. Strahlungsenergie-Wandler nach Patentanspruch 1 oder 2, wobei eine oder- mehrere dünne Schichten durch ein Beschichtungsverfahren, vorzugsweise PVD, CVD oder naßchemische Verfahren, auf einem Substrat aufgebracht worden sind.

4. Strahlungsenergie-Wandler nach Patentanspruch 3, wobei mindestens eine der dünnen Schichten eine Verbindung zwischen einem oder mehreren Metallen der Nebengruppenelemente des Periodensytems mit Stickstoff, Sauerstoff oder Kohlenstoff enthält.

5. Strahlungsenergie-Wandler nach Patentanspruch 3 oder 4, wobei für mindestens eine der dünnen Schichten ein Material aus chemischen Verbindungen zwischen einem oder mehreren Metallen (M) der Gruppe IV A des Periodensystems [= Titan, Zirkonium, Hafnium], Stickstoff (N) und/oder Sauerstoff (O) und/oder Kohlenstoff (C) verwendet wird.

6. Strahlungsenergie-Wandler nach einem der Patentansprüche 3 bis 5, wobei das Substrat ein Metall, eine Metalllegierung, eine Keramik, Glas, Kunststoff, ein kohlenstoffaserhaltiger Werkstoff oder ein Verbundwerkstoff ist.

7. Strahlungsenergie-Wandler nach einem der Patentansprüche 3 bis 6, wobei mindestens eine der dünnen Schichten ein Cermet enthält.

8. Strahlungsenergie-Wandler nach einem der Patentansprüche 1 bis 7, wobei dieser aus Teilflächen besteht, wobei jede Teilfläche einen oder mehrere Farbeindrücke aufweist.

9. Strahlungsenergie-Wandler nach einem der Patentansprüche 1 bis 8, wobei dieser verschiedene ineinander übergehende Farben aufweist.

10. Strahlungsenergie-Wandler nach einem der Patentanspruch 8, wobei die farbigen Flächen ein Strukturmuster aufweisen.

11. Verwendung des Strahlungsenergie-Wandlers nach einem der Patentansprüche 1 bis 10, wobei er in einem Sonnenkollektor, vorzugsweise einem Vakuumkollektor, Flachkollektor oder Röhrenkollektor, eingesetzt wird.

12. Verwendung des Strahlungsenergie-Wandlers nach Patentanspruch 11 wobei verschiedene farbige Teilflächen mit verschiedenen Absorptions- und Emissionsgraden in einem Sonnenkollektor kombiniert werden.

13. Verwendung des Strahlungsenergie-Wandlers nach Patentanspruch 12, wobei die Teilflächen in einem Penrose-Muster angeordnet sind.

**Claims**

1. Radiant energy converter of the selective absorber type for converting optical radiant energy into thermal energy, wherein the surface of the radiant energy converter has a solar absorption degree $\alpha > 0.4$ and a thermal emission degree $\varepsilon < 0.3$ and has a spectral reflection degree $\xi > 0.05$ for at least one wavelength visible to the eye, characterized in that the radiant energy converter is colored and has a color vector $\vec{f}$ comprising an Euclidean distance of greater 0.02 to the vector

$$\vec{U}_s = \begin{pmatrix} 0,350 \\ 0,347 \end{pmatrix}.$$

2. The radiant energy converter according to claim 1, which is a selective interference absorber.

3. The radiant energy converter according to claim 1 or 2, wherein one or several thin layers have been applied on a substrate by a coating method, preferably PVD, CVD or wet chemical methods.

4. The radiant energy converter according to claim 3, wherein at least one of the thin layers contains a linkage between one or several metals of the auxiliary group elements of the periodic system and nitrogen, oxygen or carbon.

5. The radiant energy converter according to claim 3 or 4, which for at least one of the thin layers uses a material of chemical linkages between one or several metals (M) of group IV A of the periodic system [= titanium, zirconium, hafnium], and nitrogen (N) and/or oxygen (0) and/or carbon (C).

6. The radiant energy converter according to any of claims 3 to 5, wherein the substrate is a metal, a_metal alloy, ceramics, glass, plastics, a carbon fiber-containing material or a composite.

7. Radiant energy converter according to any of claims 3 to 6, wherein at least one of the thin layers contains a cermet.

8. The radiant energy converter according to any of claims 1 to 7, which consists of partial areas, each partial area having one or several color imprints.

9. The radiant energy converter according to any of claims 1 to 8, which has various interfusing colors.

10. The radiant energy converter according to claim 8, wherein the colored areas have a structured pattern.

11. Use of the radiant energy converter according to any of claims 1 to 10, which is used in a solar collector, preferably a vacuum collector, flat plate collector or tubular collector.

12. Use of the radiant energy converter according to claim 11, wherein various colored partial areas are combined with various absorption and emission degrees in a solar collector.

13. Use of the radiant energy converter according to claim 12, wherein the partial areas are arranged within a penrose pattern.

**Revendications**

1. Convertisseur (absorbeur) d'énergie de rayonnement du type sélectif pour convertir l'énergie de rayonnement optique en énergie thermique, où la surface du convertisseur d'énergie de rayonnement présente un degré d'absorption solaire $\alpha > 0,4$ et un degré d'émission thermique $\varepsilon < 0,3$ et présente pour au moins une longueur d'onde, que l'oeil voit, un degré de réflexion spectral $\zeta$ de $> 0,05$, caractérisé en ce que le convertisseur d'énergie de rayonnement est en couleur et présente un vecteur de couleur $\vec{r}$ avec un écart euclidien du vecteur

$$\vec{U}_s = \begin{pmatrix} 0,350 \\ 0,347 \end{pmatrix}$$

supérieur à 0,02.

2. Convertisseur d'énergie de rayonnement selon la revendication 1, où il s'agit d'un absorbeur d'interférence sélectif.

3. Convertisseur d'énergie de rayonnement selon la revendication 1 ou 2, où une ou plusieurs couches minces ont été appliquées par un procédé de recouvrement, de préférence des procédés PVD, CVD ou chimiques par voie humide, sur un substrat.

4. Convertisseur d'énergie de rayonnement selon la revendication 3, où au moins l'une des couches minces contient une combinaison entre un ou plusieurs métaux des éléments du groupe secondaire du système périodique avec de l'azote, de l'oxygène ou du carbone.

5. Convertisseur d'énergie de rayonnement selon la revendication 3 ou 4, où pour au mois l'une des couches minces est utilisé un matériau de combinaisons chimiques entre un ou plusieurs métaux (M) du groupe IV A du système périodique [= titane, zirconium, hafnium], azote (N) et/ou oxygène (O) et/ou carbone (C).

6. Convertisseur d'énergie de rayonnement selon l'une des revendications 3 à 5, où le substrat est un métal, un alliage métallique, une céramique, du verre, de la matière synthétique, un matériau contenant des fibres de carbone ou un matériau composite.

7. Convertisseur d'énergie de rayonnement selon l'une des revendications 3 à 6, où au moins l'une des couches minces contient un cermet.

8. Convertisseur d'énergie de rayonnement selon l'une des revendications 1 à 7, où celui-ci est constitué de faces partielles, où chaque face partielle présente une ou plusieurs impressions en couleur.

9. Convertisseur d'énergie de rayonnement selon l'une des revendications 1 à 8, où celui-ci présente différentes couleurs qui se confondent.

10. Convertisseur d'énergie de rayonnement selon la revendication 8, où les faces en couleur présentent un motif structuré.

11. Utilisation du convertisseur d'énergie de rayonnement selon l'une des revendications 1 à 10, où celui-ci est mis en place dans un collecteur solaire, de préférence un collecteur à vide, un collecteur plat ou un collecteur tubulaire.

12. Utilisation du convertisseur d'énergie de rayonnement selon la revendication 11, où différentes faces partielles en couleur sont combinées avec différents degrés d'absorption et d'émission dans un collecteur solaire.

13. Utilisation du convertisseur d'énergie de rayonnement selon la revendication 12, où les faces partielles sont disposées selon un motif de Penrose.

FIGUR 1

FIGUR 2

FIGUR 3

FIGUR 4

FIGUR 5

FIGUR 6

Wellenlänge [µm]

Reflexionsgrad

FIGUR 7

Reflexionsgrad

Wellenlänge [µm]

FIGUR 8

FIGUR 9

FIGUR 10